# EUROPÄISCHE PATENTSCHRIFT

(11) **EP 1 510 479 B1**
(45) Veröffentlichungstag und Bekanntmachung des Hinweises auf die Patenterteilung: **06.09.2006**
(21) Anmeldenummer: 04090303.1
(22) Anmeldetag: 29.07.2004
(51) Int. Cl.: B65G 47/50

(54) **Fördersystem, insbesondere eine Flughafengepäckförderanlage, und eine Steuerung für ein solches Fördersystem**
Conveying system, in particular an air port luggage conveying system, and control for the conveying system
Système transporteur, en particulier un tapis de transport de valises pour aéroport, et équipement de commande pour le système de transport

(30) Priorität: 29.08.2003 DE 10339951
(43) Veröffentlichungstag der Anmeldung: 02.03.2005
(73) Patentinhaber: SIEMENS AKTIENGESELLSCHAFT, 80333 München (DE)
(72) Erfinder: Brixius, Wolfgang, 91077 Neunkirchen A.Br (DE); Falkner, Bernhard, 90425 Nürnberg (DE); Gerle, Andreas, 91161 Hilpoltstein (DE); Gräfer, Dominik, 44265 Dortmund-Wellinghofen (DE)

(56) Entgegenhaltungen:
- WO-A-87/06551
- DE-A- 2 028 836
- DE-A- 3 434 268
- DE-A- 4 116 283
- US-A- 3 908 113

## Beschreibung

Die Erfindung betrifft ein Fördersystem, insbesondere eine Flughafengepäckförderanlage, und eine Steuerung für ein solches Fördersystem gemäß den Oberbegriffen der Ansprüche 1 und 11.

Flughafengepäckförderanlagen als spezielle Fördersysteme sind bekannt. Dabei werden die Gepäckstücke entlang von Förderstrecken mit mehreren Verzweigungsstellen zu einem vorgegebenen Ziel transportiert. Die Transportsteuerung erfolgt dabei mittels einer Hauptsteuerung, die dafür sorgt, dass die Gepäckstücke das Ziel auf Förderrouten erreichen. Die Förderroutenvorgaben werden mittels einer untergeordneten Steuerung umgesetzt, die weder das Ziel noch die vorgegebene Route kennt. Kommt also ein Gepäckstück an eine Verzweigung, so fragt die untergeordnete Steuerung unter Angabe der Identifikationsnummer des Gepäckstücks bei der Hauptsteuerung nach, in welcher Richtung das Gepäckstück weiter zu fördern ist. Die untergeordnete Steuerung sorgt dann dafür, dass das Gepäckstück jeweils in der von der Hauptsteuerung vorgegebenen Richtung transportiert wird. Dabei muss an jeder Verzweigungsstelle erneut nach der zugehörigen Richtung gefragt werden.

Weiter ist es bekannt, dass die untergeordnete Steuerung nur die Förderrouten zu den nächstliegenden Zwischenzielen kennt. Eine Anfrage an die Hauptsteuerung erfolgt folglich immer dann, wenn ein Zwischenziel erreicht ist. Die Routen, die notwendig sind, um von Zwischenziel zu Zwischenziel zu gelangen, sind also in der unterlagerten Steuerung bereits implementiert; sie können beispielsweise von der Hauptsteuerung an die untergeordnete Steuerung übergeben worden sein.

Bekannt ist auch, den Verzweigungsstellen Weichentabellen zuzuordnen, die für jedes Gepäckstück eine Richtungsinformation aufweisen.

Insbesondere ist aus der DE 202 88 36 B eine Rohrpostanlage mit einer zentralen Mehrfachweiche entnehmbar, bei der die Förderbehälter in Rohren eines Verzweigungsstellen aufweisenden Rohrsystems transportiert werden. Die Förderbehälter tragen Identitätskennzeichen, die beim Absenden als kodierte Informationen in zentrale Schalteinrichtungen einspeicherbar sind. Die Identitätskennzeichen werden bei Ankunft von den zentralen Schalteinrichtungen zugeordneten Abtastgliedern erfasst; die Zielinformation erhält die zentrale Schalteinrichtung nach Abfragen einer dem Identitätskennzeichen entsprechenden Speicheradresse. Die Schalteinrichtungen steuern dann die Weichen an den Verzweigungsstellen anhand der jedem Identitätskennzeichen zugeordneten Zielinformation. Die Richtung, in der ein Förderbehälter weitergeleitet wird, erfolgt so übergeordnet anhand einer dem Identitätskennzeichen zugeordneten Förderroute.

Eine übergeordnete Steuerung greift hierbei in den Transport des Behälters ein, und zwar über die Ermittlung des Ziels anhand des Identitätskennzeichens und vom Ziel abgeleitet durch Vorgabe der Weiterleitungsrichtung an der zu passierenden Verzweigungsstelle abhängig von der vorgesehenen Förderroute.

Dies hat den Nachteil eines hohen Datenaufkommens.

Ferner ist aus der DE 411 62 83 A1 ein Transportsystem zum Transportieren von Förderteilen über berechnete Transportwege bekannt. Bei den Förderteilen handelt es sich um Nähgut, welches an eine gewünschte Arbeitsstation (Ziel) transportiert werden soll. Das Förderteil erfährt eine Verteilung durch eine Vielzahl von Verteilungsvorrichtungen, die über Transportschienen miteinander verbunden sind. Jede der Verteilungsvorrichtungen wird durch einen elektronischen Steuerschaltkreis gesteuert, der mit einem Hostrechner für die Gesamtsteuerung des Transportsystems verbunden ist. Der Hostrechner erzeugt die Zielsignale für jedes der Förderteile, um dieses jeweils weiterzutransportieren. Die Steuerschaltkreise speichern die vom Hostrechner übermittelten Zielbefehle dazu in eine Ziel-Befehls-Tabelle. Zur richtigen Zuordnung sind die Förderteile mit Identifizierungsnummern versehen, welche mittels Zahlenleseeinrichtungen gelesen werden können. Das Transportsystem besteht aus mehreren Transportlinien, die miteinander über Brückenschienen verbunden sind. Bei Auftreten einer Störung, beispielsweise in Form eines Staus, sorgt der Hostrechner für eine Umgehung, indem die Förderteile über eine andere Transportlinie geleitet werden. Durch eine derartige Steuerung der Verteilungsvorrichtungen erreicht das Förderteil sein Ziel selbst dann, wenn auf einem Transportweg eine Störung vorhanden ist.

Auch hier nimmt der Hostrechner die Steuerung in Form von Zielvorgaben direkt vor, was ebenfalls mit dem Nachteil eines hohen Datenaufkommens verbunden ist.

Die Aufgabe der Erfindung ist es, ein Fördersystem und eine zugehörige Steuerung zu schaffen, die bei einer Vielzahl von Verzweigungsstellen einfach aufgebaut sind und in Bezug auf die Steuerung ein geringes Datenaufkommen aufweisen.

Zur Lösung dieser Aufgabe ist bezüglich des Fördersystems durch die im Anspruch 1 und bezüglich der Steuerung durch die im Anspruch 11 angegebenen Merkmale gegeben. Durch die kennzeichnenden Merkmale der Unteransprüche ist das Fördersystem in vorteilhafter Weise weiter ausgestaltet.

Die Lösung sieht bezogen auf das Fördersystem vor, dass von der überlagerten Steuerung an den Verzweigungsstellen jedem Ziel eine Weiterleitungsrichtung zugeordnet ist und die Weiterleitung von der unterlagerten Steuerung ohne Rückfrage an die überlagerte Steuerung jeweils anhand der vorgegebenen Zuordnung umgesetzt wird. Ziel- und Förderrouteninformationen sind also voneinander getrennt. Durch diese Trennung ist das Datenaufkommen deutlich verringert. Zwischen überlagerter und unterlagerter Steuerung existiert dabei eine klare Aufgabenteilung. Der Grundgedanke der Lösung ist also die Trennung zwischen Ziel- und Weginformation. In der Regel variieren die Ziele stärker als die Wege zu den Zielen, so dass durch die Trennung zwischen Weg- und Zielinformation die Weginformation meist unverändert bleiben kann. Dadurch wird das Datenaufkommen deutlich gesenkt. Die Trennung von Weg und Ziel spiegelt sich in der Trennung zwischen überlagerter und unterlagerter Steuerung wieder, wobei die überlagerte Steuerung der unterlagerten Steuerung die Wege und die Ziele vorgibt, während die unterlagerte Steuerung die Vorgaben lediglich ausführt. Die Zielinformation enthält keine Information darüber, wie das Fördergut zum Ziel gelangen soll. Diese Weginformation ist für jede Verzweigungsstelle vorzugsweise in einer Weichentabelle hinterlegt, wobei erst alle Weichentabellen die einzelnen Förderrouten abhängig vom Aufgabeort (wenn mehrere vorhanden sind) und vom Ziel definieren. Nicht jedes Fördergut kann aufgrund dieses Zusammenhangs über jede beliebige Förderroute befördert werden. Hat die unterlagerte Steuerung die Informationen einmal erhalten, kann sie die Transportaufträge ganz ohne Zwischenanfragen an die überlagerte Steuerung durchführen.

Die Performance des Fördersystems lässt sich verbessern, wenn das Ziel ein Zwischenziel oder das Endziel ist.

Jedem Fördergut ist eine Identifikationsnummer zugeordnet, wobei Fördergüter mit gleicher Identifikationsnummer das Ziel über die gleichen Förderrouten anfahren.

Die Identifikationsnummern müssen mittels eines Sensors lesbar oder von der überlagerten Steuerung nach Art eines Datentrackings verfolgbar sein.

Die Kommunikation zwischen der überlagerten und der unterlagerten Steuerung ist einfacher, wenn die Ziele der Fördergüter von der überlagerten Steuerung in einer Zieltabelle abgelegt werden, auf welche die unterlagerte Steuerung Zugriff hat.

Insbesondere vereinfacht sich die Kommunikation, wenn die Richtungen der Fördergüter an einer Verzweigungsstelle von der überlagerten Steuerung in einer Weichentabelle abgelegt werden, auf welche die unterlagerte Steuerung Zugriff hat.

Die Performance des Fördersystems lässt sich verbessern, wenn jede Ziel- und jede Weichentabelle während des Betriebs änderbar sind.

Insbesondere ist es von Vorteil, wenn bei einem Stau der Fördergüter die Weichentabellen derart geändert werden, dass eine Umgehung des Staus erfolgt.

Um auch bei mehreren unmittelbaren aneinander anschließenden Steuerungsbereichen eine hohe Performance des Systems zu erzielen, wird vorgeschlagen, dass mehrere unmittelbar aneinander anschließende Steuerungsbereiche vorgesehen sind und dass bei einem Übergang eines Förderguts von einem Bereich in einen anderen von der unterlagerten Steuerung zumindest die Identifikationsnummer und das Ziel des Förderguts übergeben werden.

Zweckmäßigerweise fragt die unterlagerte Steuerung in Konfliktfällen bei der überlagerten Steuerung bezüglich des Ziels und der Richtung des Förderguts nach.

Die Lösung sieht bezogen auf die Steuerung vor, dass von der überlagerten Steuerung an den Verzweigungsstellen jedem Ziel eine Weiterleitungsrichtungzugeordnet ist und die Weiterleitung von der unterlagerten Steuerung ohne Rückfrage an die überlagerte Steuerung jeweils anhand der vorgegebenen Zuordnung umgesetzt wird. Die oben für das Fördersystem beschriebenen Vorteile gelten sinngemäß auch für die Steuerung.

Die Erfindung wird nachfolgend anhand einer Zeichnung näher beschrieben.

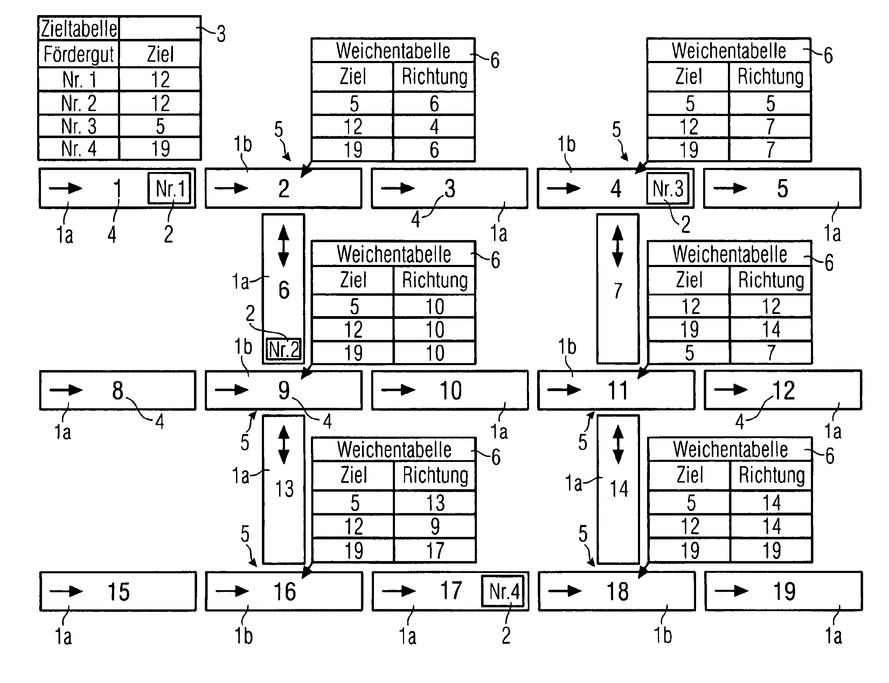

Die einzige Figur zeigt ein Fördersystem mit mehreren hintereinander geschalteten Förderelementen 1a, 1b in einer schematischen Darstellung, die zum Transport von Fördergütern 2 zu vorgegebenen Zielen dienen. Jedem Fördergut 2 ist dazu eine Identifikationsnummer Nr. 1, Nr. 2, Nr. 3, Nr.4 zugeordnet. Die Ziele sind für jedes Fördergut in einer Zieltabelle 3 abgelegt.

Alle Förderelemente 1a, 1b sind in der Figur durch eine Ziffer 4 gekennzeichnet. Die Pfeile in den Förderelementkästchen stellen die Förderrichtung des entsprechenden Förderelements 1a, 1b dar.

In der Zieltabelle 3 sind als Ziele beispielhaft Förderelemente 1b eingetragen (Nummern 12, 5, 19 in den Förderelementkästchen), bei denen es sich um ein Zwischenziel oder um ein Endziel handeln kann.

Wie die Figur zeigt, handelt es sich bei den Förderelementen 1b um Verzweigungsstellen 5, an denen die Fördergüter 2 in eine von zwei unterschiedlichen Richtungen weitergeleitet werden können. Bei den Verzweigungsstellen 5 kann es sich um Weichen, Eckumsetzer, Hubtische, Drehtische, Drehhubtische, Pusher, Puller, Sorter und dergleichen handeln. Die Förderelemente 1b (Nummern 6, 7, 13, 14) können dabei in zwei entgegengesetzten Förderrichtungen betrieben werden. Zu jeder Verzweigungsstelle 5 gehört eine Weichentabelle 6, in der jeweils in Abhängigkeit von den Zielen (Förderelemente 1a mit den Nummern 5, 12, 19) eine Richtung vorgeschrieben ist. Die Richtungen in den Weichentabellen 6 sind durch die Nummern 4 der beiden unmittelbar anschließenden Förderelemente 1a in die Weichentabelle 6 eingetragen.

Die Steuerung des Fördergütertransports erfolgt mittels einer überlagerten und einer unterlagerten Steuerung (in der Figur nicht gezeigt), wobei die überlagerte Steuerung für jedes Fördergut das Ziel in Form der Zieltabelle 3 vorgibt, in dem sie diese an die unterlagerte Steuerung übergibt. Es ist auch möglich, dass sich die unterlagerte Steuerung die aktuelle Zieltabelle 3 softwaremäßig herunterlädt. Die unterlagerte Steuerung sorgt dafür, dass das entsprechende Fördergut 2 auf der vorgeschriebenen Förderroute (Abfolge der Förderelemente 1a, 1b) zum in der Zieltabelle 3 abgelegten Ziel gefördert wird. Die Vorgabe der Förderrouten für die einzelnen Fördergüter 2 erfolgt untersetzt mittels der Weichentabellen 6. Auf diese Weise wird der unterlagerten Steuerung für jedes Fördergut 2 an jeder Verzweigungsstelle 5 abhängig vom Ziel des Förderguts 2 (Zieltabelle 3) eindeutig eine der beiden Richtungen vorgegeben und das Fördergut 2 in diese Richtung weitergeleitet. Die Weichentabellen 6 sind von der übergeordneten Steuerung während des Betriebs jederzeit änderbar. Dies gilt selbstverständlich auch für die Zieltabelle 3. Insbesondere bei einem Stau der Fördergüter 2 können die Weichentabellen 6 so geändert werden, dass eine Umgehung des Staus ermöglicht wird.

Zur Erfassung der Identifikationsnummer Nr. 1, Nr. 2, Nr. 3, Nr.4 und damit des konkreten Förderguts 2 sind in den einzelnen Förderelementen 1b nicht gezeigte Sensoren vorgesehen. (Es ist aber auch möglich, dass die Fördergüter 2 nach Art eines Datentrackings von der unterlagerten Steuerung verfolgt werden.)

Bei dem in der Figur dargestellten Fördersystem fahren Fördergüter 2 mit gleicher Identifikationsnummer Nr. 1, Nr. 2, Nr. 3, Nr.4 das Ziel über die gleichen Förderrouten an.

Beispielhaft zeigt die Figur das Fördergut 2 mit der Identifikationsnummer Nr.2 an einer Verzweigungsstelle 5 befindlich, dem Förderelement 1b mit der Nummer 9. Die unterlagerte Steuerung entnimmt der Zieltabelle 3 für dieses Fördergut 2 als Ziel das Förderelement 1a mit der Nummer 12. Für dieses Ziel enthält die zugehörige Weichentabelle 6 die Richtung des Förderelements 1a mit der Nummer 10. Folglich wird das Fördergut 2 mit der Identifikationsnummer Nr. 2 in Richtung des Förderelements 1a mit der Nummer 10 geleitet.

Entsprechend erfolgt die Weiterleitung der Fördergüter 2 an den anderen Verzweigungsstellen 5.

Besteht das Fördersystem aus einem Netzwerk von unterlagerten Steuerungen, so muss die überlagerte Steuerung beim Übergang eines Fördergutes 2 von einem Steuerungsbereich (einer unterlagerten Steuerung) in einen anderen unmittelbar benachbarten (einer unmittelbar benachbarten unterlagerten Steuerung) nicht angefragt werden, da der abgebende Steuerungsbereich dem aufnehmenden Steuerungsbereich zumindest die Identifikationsnummer Nr. 1, Nr. 2, Nr. 3, Nr.4 und das Ziel des Förderguts 2 übergeben.

In Konfliktfällen kann die unterlagerte Steuerung allerdings bei der überlagerten Steuerung bezüglich Ziel und Richtung des Förderguts 2 nachfragen.

Damit sind beliebig große Steuerungsnetzwerke bei dieser Art der Steuerung eines Fördersystems möglich.

## Patentansprüche

1. Fördersystem, insbesondere eine Flughafen-Gepäckförderanlage, zum Transport von Fördergütern (2) zu einem vorgegebenen Ziel auf dafür vorgesehenen Förderrouten, die eine Vielzahl von Verzweigungsstellen (5) aufweisen,
mit einer überlagerten Steuerung, durch die für jedes Fördergut (2) das Ziel und die Förderroute vorgebbar sind, die von einer unterlagerten Steuerung umgesetzt werden,
wobei jedem Fördergut (2) eine Identifikationsnummer (Nr. 1, Nr. 2, Nr. 3, Nr. 4) zugeordnet ist, die von der unterlagerten Steuerung erfasst wird, und
wobei der unterlagerten Steuerung das Ziel für jede Identifikationsnummer (Nr. 1, Nr. 2, Nr. 3, Nr. 4) von der überlagerten Steuerung vorgegeben wird,
**dadurch gekennzeichnet,**
**dass** von der überlagerten Steuerung an den Verzweigungsstellen (5) jedem Ziel eine Weiterleitungsrichtung zugeordnet ist und die Weiterleitung von der unterlagerten Steuerung ohne Rückfrage an die überlagerte Steuerung jeweils anhand der vorgegebenen Zuordnung umgesetzt wird.

2. Fördersystem nach Anspruch 1,
**dadurch gekennzeichnet,**
**dass** das Ziel ein Zwischenziel oder das Endziel ist.

3. Fördersystem nach Anspruch 1 oder 2,
**dadurch gekennzeichnet,**
**dass** Fördergüter (2) mit gleicher Identifikationsnummer (Nr. 1, Nr. 2, Nr. 3, Nr. 4) das Ziel über die gleichen Förderrouten anfahren.

4. Fördersystem nach Anspruch 3,
**dadurch gekennzeichnet,**
**dass** die Identifikationsnummern (Nr. 1, Nr. 2, Nr. 3, Nr. 4) mittels eines Sensors lesbar oder von der überlagerten Steuerung nach Art eines Datentrackings verfolgbar sind.

5. Fördersystem nach einem der Ansprüche 1 - 4,
**dadurch gekennzeichnet,**
**dass** die Ziele der Fördergüter (2) von der überlagerten Steuerung in einer Zieltabelle (3) abgelegt werden, auf welche die unterlagerte Steuerung Zugriff hat.

6. Fördersystem nach einem der Ansprüche 1 - 5,
**dadurch gekennzeichnet,**
**dass** die Richtungen der Fördergüter (2) an einer Verzweigungsstelle (5) von der überlagerten Steuerung in einer Weichentabelle (6) abgelegt werden, auf welche die unterlagerte Steuerung Zugriff hat.

7. Fördersystem nach Anspruch 6,
**dadurch gekennzeichnet,**
**dass** jede Weichentabelle (6) während des Betriebs änderbar ist.

8. Fördersystem nach Anspruch 6 oder 7,
**dadurch gekennzeichnet,**
**dass** bei einem Stau der Fördergüter (2) die Weichentabellen (6) derart geändert werden, dass eine Umgehung des Staus erfolgt.

9. Fördersystem nach einem der Ansprüche 1 - 8,
**dadurch gekennzeichnet,**
**dass** mehrere unmittelbar aneinander anschließende Steuerungsbereiche vorgesehen sind und dass bei einem Übergang eines Förderguts (2) von einem Bereich in einen anderen von der unterlagerten Steuerung zumindest die Identifikationsnummer (Nr. 1, Nr. 2, Nr. 3, Nr. 4) und das Ziel des Förderguts (2) übergeben werden.

10. Fördersystem nach einem der Ansprüche 1 - 9,
**dadurch gekennzeichnet,**
**dass** die unterlagerte Steuerung in Konfliktfällen bei der überlagerten Steuerung bezüglich Ziel und Richtung des Förderguts (2) nachfragt.

11. Steuerung für ein Fördersystem, insbesondere eine Flughafen-Gepäckförderanlage, zum Transport von Fördergütern (2) zu einem vorgegebenen Ziel auf dafür vorgesehenen Förderrouten, die eine Vielzahl von Verzweigungsstellen (5) aufweisen,
umfassend eine überlagerte Steuerung, durch die für jedes Fördergut (2) das Ziel und die Förderroute vorgebbar sind, die von einer unterlagerten Steuerung umgesetzt werden, wobei jedem Fördergut (2) eine Identifikationsnummer (Nr. 1, Nr. 2, Nr. 3, Nr. 4) zugeordnet ist, die von der unterlagerten Steuerung erfasst wird, und
wobei der unterlagerten Steuerung das Ziel für jede Identifikationsnummer (Nr. 1, Nr. 2, Nr. 3, Nr. 4) von der überlagerten Steuerung vorgegeben wird, **dadurch gekennzeichnet,**
**dass** von der überlagerten Steuerung an den Verzweigungsstellen (5) jedem Ziel eine Weiterleitungsrichtungzugeordnet ist und die Weiterleitung von der unterlagerten Steuerung ohne Rückfrage an die überlagerte Steuerung jeweils anhand der vorgegebenen Zuordnung umgesetzt wird.

## Claims

1. Conveyor system, in particular an airport baggage handling system, for transporting conveyed items (2) to a preset destination on conveyor routes provided for this purpose and having a multiplicity of branching points (5),
comprising a master control system, by which, for each conveyed item (2), the destination and the conveyor route can be preset, which are implemented by a subordinate control system,
wherein to each conveyed item (2) there is assigned an identification number (no. 1, no. 2, no. 3, no. 4), which is scanned by the subordinate control system, and
wherein the destination for each identification number (no. 1, no. 2, no. 3, no. 4) is preset for the subordinate control system by the master control system,
**characterized in that**
at the branching points (5) a forwarding direction is assigned to each destination by the master control system and the forwarding is implemented by the subordinate control system, without inquiry to the master control system, respectively on the basis of the preset assignment.

2. Conveyor system according to Claim 1, **characterized in that** the destination is an intermediate destination or the final destination.

3. Conveyor system according to Claim 1 or 2, **characterized in that** conveyed items (2) bearing the same identification number (no. 1, no. 2, no. 3, no. 4) head for the destination via the same conveyor routes.

4. Conveyor system according, to Claim 3, **characterized in that** the identification numbers (no. 1, no. 2, no. 3, no. 4) can be read by means of a sensor or can be tracked by the master control system in the manner of a data tracking system.

5. Conveyor system according to one of Claims 1-4, **characterized in that** the destinations of the conveyed items (2) are stored by the master control system in a destination table (3) to which the subordinate control system has access.

6. Conveyor system according to one of Claims 1-5, **characterized in that** the directions of the conveyed items (2) at a branching point (5) are stored by the master control system in a switchpoint table (6) to which the subordinate control system has access.

7. Conveyor system according to Claim 6, **characterized in that** each switchpoint table (6) can be altered during operation.

8. Conveyor system according to Claim 6 or 7, **characterized in that**, in the event of a logjam of the conveyed items (2), the switchpoint tables (6) are altered in such a way that the logjam is by-passed.

9. Conveyor system according to one of Claims 1-8, **characterized in that** a plurality of directly adjoining control zones are provided, and **in that**, when a conveyed item (2) passes from one zone into another, at least the identification number (no. 1, no. 2, no. 3, no. 4) and the destination of the conveyed item (2) are passed on by the subordinate control system.

10. Conveyor system according to one of Claims 1-9, **characterized in that**, in case of conflicts, the subordinate control system interrogates the master control system with regard to the destination and direction of the conveyed item (2).

11. Control system for a conveyor system, in particular an airport baggage handling system, for transporting conveyed items (2) to a preset destination on conveyor routes provided for this purpose and having a multiplicity of branching points (5),
comprising a master control system, by which, for each conveyed item (2), the destination and the conveyor route can be preset, which are implemented by a subordinate control system,
wherein to each conveyed item (2) there is assigned an identification number (no. 1, no. 2, no. 3, no. 4), which is scanned by the subordinate control system, and
wherein the destination for each identification number (no. 1, no. 2, no. 3, no. 4) is preset for the subordinate control system by the master control system,
**characterized in that**
at the branching points (5) a forwarding direction is assigned to each destination by the master control system and the forwarding is implemented by the subordinate control system, without inquiry to the master control system, respectively on the basis of the preset assignment.

## Revendications

1. Système de transport, en particulier installation de transport de bagages dans des aéroports, pour convoyer des objets transportés (2) à une destination prédéfinie sur des itinéraires de transport prévus à cet effet et équipés d'une pluralité de points d'embranchement (5),
comportant une commande directrice qui permet de prédéfinir pour chaque objet transporté (2) la destination et l'itinéraire de transport qui sont mis en oeuvre par une commande subordonnée,
un numéro d'identification (n° 1, n° 2, n° 3, n° 4), qui est recensé par la commande subordonnée, étant associé à chaque objet transporté (2) et
la commande directrice prédéfinit à la commande subordonnée la destination pour chaque numéro d'identification (n° 1, n° 2, n° 3, n° 4),
**caractérisé en ce qu'**une direction de réacheminement est associée à chaque destination par la commande directrice aux points d'embranchement (5) et le réacheminement est mis en oeuvre par la commande subordonnée sans demander de précisions à la commande directrice respectivement à l'aide de l'association prédéfinie.

2. Système de transport selon la revendication 1, **caractérisé en ce que** la destination est une destination intermédiaire ou une destination finale.

3. Système de transport selon la revendication 1 ou 2, **caractérisé en ce que** des objets transportés (2) qui portent le même numéro d'identification (n° 1, n° 2, n° 3, n° 4) atteignent la destination par les mêmes itinéraires de transport.

4. Système de transport selon la revendication 3, **caractérisé en ce que** les numéros d'identification (n° 1, n° 2, n° 3, n° 4) peuvent être lus par un détecteur ou être suivis par la commande directrice à la manière d'un traçage de données.

5. Système de transport selon l'une des revendications 1 à 4, **caractérisé en ce que** les destinations des objets transportés (2) sont enregistrées par la commande directrice dans un tableau de destinations (3) auquel a accès la commande subordonnée.

6. Système de transport selon l'une des revendications 1 à 5, **caractérisé en ce que** les directions - des objets transportés (2) - à un point d'embranchement (5) sont enregistrées par la commande directrice dans un tableau d'aiguillage (6) auquel a accès la commande subordonnée.

7. Système de transport selon la revendication 6, **caractérisé en ce que** chaque tableau d'aiguillage (6) peut être modifié pendant le fonctionnement.

8. Système de transport selon la revendication 6 ou 7, **caractérisé en ce que** les tableaux d'aiguillage (6) sont modifiés de manière à contourner l'accumulation au cas où les objets transportés (2) s'accumuleraient.

9. Système de transport selon l'une des revendications 1 à 8, **caractérisé en ce qu'**on prévoit plusieurs zones de commande qui se suivent directement l'une l'autre et que, lorsqu'un objet transporté (2) passe d'une zone à une autre, au moins le numéro d'identification (n° 1, n° 2, n° 3, n° 4) et la destination de l'objet transporté (2) sont transmis par la commande subordonnée.

10. Système de transport selon l'une des revendications 1 à 9, **caractérisé en ce que**, en cas de conflit, la commande subordonnée adresse à la commande directrice une demande relative à la destination et à la direction de l'objet transporté (2).

11. Commande pour un système de transport, en particulier installation de transport à bagages dans des aéroports, pour convoyer des objets transportés (2) à une destination prédéfinie sur des itinéraires de transport prévus à cet effet et équipés d'un grand nombre de points d'embranchement (5),
comportant une commande directrice qui permet de prédéfinir pour chaque objet transporté (2) la destination et l'itinéraire de transport qui sont mis en oeuvre par une commande subordonnée,
un numéro d'identification (n° 1, n° 2, n° 3, n° 4) qui est recensé par la commande subordonnée, étant associé à chaque objet transporté (2) et
la commande directrice prédéfinit à la commande subordonnée la destination pour chaque numéro d'identification (n° 1, n° 2, n° 3, n° 4),
**caractérisé en ce qu'**une direction de réacheminement est associée à chaque destination par la commande directrice aux points d'embranchement (5) et le réacheminement est mis en oeuvre par la commande subordonnée sans demander de précisions à la commande directrice respectivement à l'aide de l'association prédéfinie.
